# FASCICULE DE BREVET EUROPEEN

(11) **EP 3 031 678 B1**
(45) Date de publication et mention de la délivrance du brevet: **22.01.2020**
(21) Numéro de dépôt: 15195878.2
(22) Date de dépôt: 23.11.2015
(51) Int. Cl.: B60S 1/52

(54) **DISPOSITIF DE PROJECTION D'UN LIQUIDE DE LAVAGE POUR UN BRAS DE BALAI POUR SYSTÈME D'ESSUYAGE D'UNE VITRE D'UN VÉHICULE AUTOMOBILE**
VORRICHTUNG ZUM SPRITZEN EINER REINIGUNGSFLÜSSIGKEIT FÜR EINEN WISCHERARM EINES SCHEIBENWISCHERSYSTEMS FÜR EIN KRAFTFAHRZEUG
DEVICE FOR SPRAYING A WASHING LIQUID FOR A WIPER ARM FOR A WIPER SYSTEM OF A MOTOR VEHICLE WINDOW

(30) Priorité: 09.12.2014 FR 1462090
(43) Date de publication de la demande: 15.06.2016
(73) Titulaire: Valeo Systèmes d'Essuyage, 78322 Le Mesnil Saint Denis (FR)
(72) Inventeur: CAILLOT, Gérald, 78720 CERNAY LA VILLE (FR); ROLLET, Sébastien, 63260 Aigueperse (FR); PICOT, Philippe, 63000 Les Pradeaux (FR)
(74) Mandataire: Callu-Danseux, Violaine

(56) Documents cités:
- DE-A1-102004 007 351
- DE-A1-102010 062 928
- DE-A1-102012 224 474
- FR-A1- 2 902 063
- US-A1- 2003 009 841

## Description

La présente invention se rapporte à un dispositif de projection d'un liquide de lavage pour un bras de balai pour système d'essuyage d'une vitre d'un véhicule automobile, un bras de balai pour un système d'essuyage et un système d'essuyage.

Pour assurer un bon nettoyage d'une vitre, la projection d'un liquide de lavage en amont de la lame d'essuyage est indispensable.

A cet effet, on connaît des buses de projection disposées au niveau de la carrosserie d'un véhicule, qui projettent du liquide lave-glace sur la vitre à nettoyer. Toutefois, le jet projeté ne vise souvent qu'une seule zone d'impact de sorte que le liquide de lavage n'agit pas de manière uniforme sur toute la surface à nettoyer.

On connaît également des bras de balai qui sont équipés de buses de projection d'un liquide de lavage. Dans ce cas, un ou plusieurs jets de lavage sont généralement projetés sur la vitre dans une direction générale perpendiculaire au plan défini par la vitre et juste en amont de la lame d'essuyage.

Afin d'améliorer la situation de projection de liquide de lavage, on connaît aussi des bras de balais équipés de buses de projection latérale d'un liquide de lavage. On peut par exemple citer les documents DE102010064178, FR2859963, US6094772, JP2002321599 ou DE19826846.

Toutefois, pour certains de ces documents, les buses font partie intégrale du bras de sorte que l'on ne peut pas moduler le bras pour proposer à des constructeurs à la fois des bras avec ou sans buses de projection.

Le document DE102004007351 décrit un bras de balai où des buses de projection sont intégrées dans une chape spécifique avec une portion décalée latéralement. Cette modification de la chape n'est pas souhaitable étant donné qu'elle entraîne une modification importante des performances structurelles de la chape, notamment en termes de tenue mécanique.

De plus, cela nécessite de prévoir lors du montage sur chaîne deux chapes différentes pour un même type de bras de balai, ce qui peut être source d'erreur.

Par ailleurs, il a été constaté que trop souvent, des utilisateurs utilisent l'eau du robinet comme liquide de lavage. Dans des régions calcaires, cela peut poser problème lorsque les buses se bouchent par du tartre. En effet, devant un tel dysfonctionnement, un garagiste pourrait proposer le remplacement intégral du bras de balai, alors que seules les buses ne fonctionnent plus.

La présente invention se propose de remédier au moins partiellement aux inconvénients ci-dessus mentionnés en présentant une solution simple à réaliser et peu couteuse qui puisse s'adapter à un grand nombre de bras de balai, en particulier sans modifier la conception de ces derniers. De plus, on souhaite aussi une possibilité d'échange rapide, facile et peu coûteuse en cas de dysfonctionnement.

A cet effet, l'invention a pour objet un bras de balai pour système d'essuyage d'une vitre d'un véhicule automobile comprenant une extrémité de bras de balai en forme de chape destinée à recevoir un dispositif de fixation du balai, et un dispositif de projection comprenant d'une part un capotage dimensionné à coiffer l'extrémité du bras de balai en forme de chape, la totalité du volume intérieur du capotage ayant sensiblement la même forme que la forme extérieure de l'extrémité de bras et d'autre part un gicleur d'un liquide de lavage maintenu de façon amovible par le capotage.

Ainsi, grâce au capotage et au gicleur intégré dans le capotage, un échange peut être réalisé facilement en cas de dysfonctionnement. De plus, on peut équiper facilement à un grand nombre de types de bras de balai d'un dispositif de projection d'un liquide de lavage.

Le dispositif de projection selon l'invention peut comporter en outre une ou plusieurs des caractéristiques suivantes prises seules ou en combinaison :
Selon un aspect, le capotage comprend des moyens d'encliquetage sur l'extrémité du bras.

Selon un autre aspect, la totalité du volume intérieur du capotage a sensiblement la même forme que la forme extérieure de l'extrémité du bras, l'extrémité du bras étant considérée comme la partie du bras recevant un dispositif de fixation du balai.

Selon un autre aspect, le capotage comprend deux parois latérales externes et au moins une paroi interne, ladite au moins une paroi interne délimitant avec une des parois latérale externe un logement recevant le gicleur.

De manière avantageuse, le capotage comprend deux parois internes délimitant avec les deux parois latérales externes deux logements recevant chacun un gicleur afin de projeter le liquide de lavage de part et d'autre de la lame racleuse.

Le capotage peut comprendre des protubérances pour maintenir le gicleur par coopération de forme.

Le gicleur est par exemple formé d'une embase de projection et d'un couvercle de distribution en liquide de lavage, l'embase étant fixée au couvercle.

De manière alternative, le gicleur est monobloc.

Selon encore un autre aspect, le gicleur comporte plusieurs buses permettant de former un éventail de projection d'un liquide de lavage.

Le dispositif comporte préférentiellement un moyen de chauffage du gicleur, du type thermistance ou résistance à coefficient de température positif.

Enfin, l'invention concerne un système d'essuyage comprenant un bras de balai tel que défini ci-dessus.

D'autres avantages et caractéristiques apparaîtront à la lecture de la description de l'invention, ainsi que des dessins annexés sur lesquels :
- la figure 1 est une vue en perspective d'un mode de réalisation d'un bras de balai selon l'invention,
- la figure 2 est une vue en perspective éclatée du bras de la figure 1
- la figure 3 est une vue de dessous d'un capotage d'un bras de balai des figures 1 et 2,
- la figure 4 est une vue en perspective d'un gicleur d'un bras de balai des figures 1 et 2,
- les figures 5A et 5B sont des vues en perspectives d'éléments formant le gicleur,
- la figure 6 est une vue par-dessous d'un capotage et d'un gicleur assemblé d'un bras de balai des figures 1 et 2,
- la figure 7 est une vue par-dessous d'un capotage avec un gicleur intégré assemblé sur une chape de bras de balai,
- la figure 8 est une vue de dessous d'un bras de balais des figures 1 et 2 sans adaptateur et lame d'essuyage.

On va maintenant décrire un exemple d'un mode de réalisation en référence aux figures.

Sur toutes les figures, les mêmes éléments portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Les termes « dessus » et « dessous » sont utilisés selon le sens commun quand un balai d'essuie-glace est installé sur un véhicule. On considère que la face du bras de balai qui est proximale à un pare-brise à essuyer, est la face de dessous et la face du bras de balai qui est distale du pare-brise, est la face de dessus.

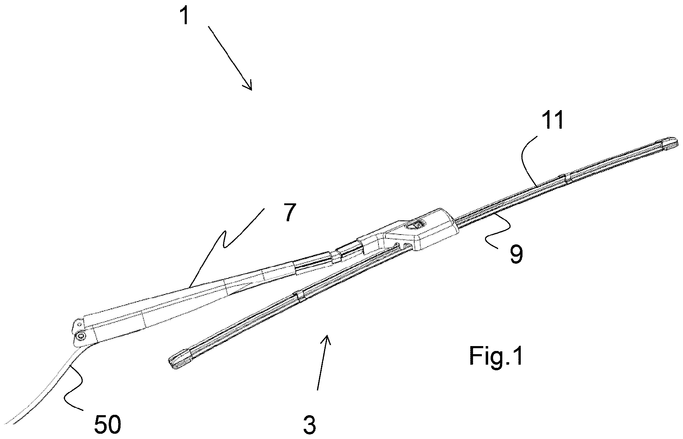

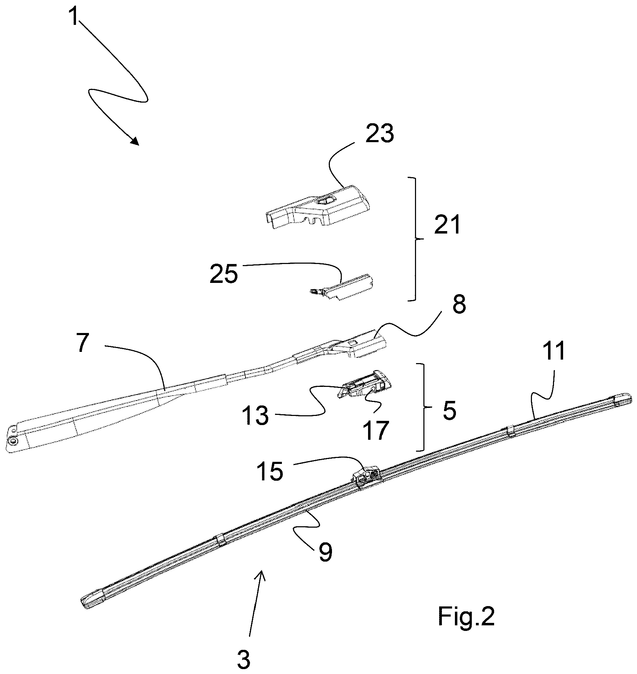

Les figures 1 et 2 montrent un dispositif d'essuyage 1 ou essuie-glace comprenant un balai 3, un dispositif de fixation 5 et un bras de balai 7 comportant à une extrémité une chape de support 8 raccordée au balai 3 par le dispositif de fixation 5.

Le balai 3 comprend notamment une lame racleuse 9 ou lame d'essuyage et une ou plusieurs vertèbres 11, dans le présent cas une vertèbre 11 sous forme d'une lame métallique, donnant au balai 3 un cintrage lui permettant d'être appliqué correctement sur un pare-brise. Le balai 3 peut aussi comprendre un déflecteur et/ou des embouts maintenant en particulier la lame racleuse 9 et la / les vertèbres 11 ensemble.

Le dispositif de fixation 5 comprend d'une part un adaptateur 13 porté par le bras de balai 7 et d'autre part un connecteur 15 fixé, sans degrés de liberté au balai 3.

Le connecteur 15 qui est articulé en pivotement par un axe 17 sur l'adaptateur 13 porté par le bras de balai 7.

Le connecteur 15 est fixé sans degrés de liberté sur le balai 3, par exemple par deux brides symétriques prenant en sandwich le balai 3 au niveau de la vertèbre 11 du balai 3.

Le bras de balai 7 est équipé d'un dispositif 21 de projection d'un liquide de lavage.

Ce dispositif de projection 21 comprend d'une part un capotage 23 coiffant la chape de support 8 et d'autre part un gicleur 25 d'un liquide de lavage maintenu de façon amovible par le capotage 23. Aussi bien le capotage 23 que le gicleur 25 sont par exemple réalisés en matière plastique.

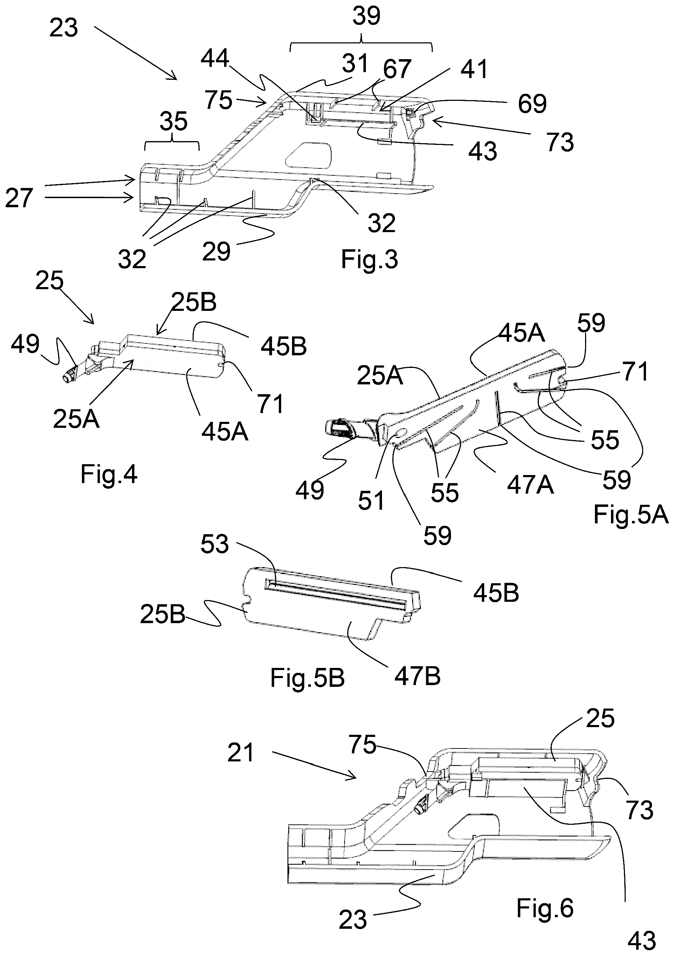

La structure du capotage 23 est bien visible par une vue de dessous sur la figure 3. Le capotage 23 comprend notamment des moyens d'encliquetage 27 sur la chape de support 8. Le capotage 23 est dimensionné de manière à coiffer l'extrémité 8 du bras de balai 7, c'est-à-dire que la totalité du volume intérieur du capotage 23 a sensiblement la même forme que la forme extérieure de l'extrémité 8 du bras de balai 7, l'extrémité du bras 8 étant considérée comme la partie du bras recevant le dispositif de fixation 5 du balai 3.

Plus précisément, le capotage 23 comprend deux parois latérales externes 29 et 31.

La paroi latérale externe 29 épouse la forme d'une première paroi latérale 33 de la chape de support 8 et présente au moins un premier, dans le présent cas quatre premiers organes d'encliquetage 32 qui se greffent sur la paroi latérale 33 de la chape de support 8.

La paroi latérale externe 31 épouse dans une première portion rétrécie 35 une seconde paroi latérale 37 de la chape de support 8, opposée à la première 33, puis s'écarte de cette paroi latérale 37 pour terminer dans une seconde portion élargie 39 qui est parallèle à la seconde paroi latérale 37 de la chape de support 8 et plus large que celle-ci, de façon à ménager un logement 41 pour le gicleur 25.

Pour s'accrocher à la seconde paroi latérale 37 de la chape de support 8, le capotage 23 comprend au niveau de la second portion élargie 39 une paroi interne 43 présentant au moins un second organe d'encliquetage 44 coopérant avec la seconde paroi latérale 37 de la chape de support 8.

Cette paroi interne 43 délimite dans la seconde portion élargie 39 le logement 41 recevant le gicleur 25.

On comprend donc que le capotage se fixe simplement par encliquetage sur la chape de support 8 et peut se détacher de celle-ci en vainquant les forces de retenue des moyens d'encliquetage 27.

Le gicleur 25 est montré plus en détail sur les figures 4 et 5A et 5B.

Le gicleur 25 possède une forme générale parallélépipédique.

Il est réalisé en deux pièces, une embase de projection 25A et un couvercle de distribution 25B, assemblées par exemple par collage ou soudure, notamment une soudure par ultrasons.

Sur la figure 4 on voit les faces externes 45A et 45B du gicleur 25 tandis que la figure 5A montre la face interne 47A opposée à la face 45A et destiné à être à l'état assemblé en vis-à-vis d'une face interne 47B montrée sur la figure 5B, cette face 47B étant opposée à la face externe 45B.

Comme, on le voit sur les figures 4 et 5A, une canule d'alimentation 49 est réalisée d'une seule pièce avec la partie 25A du gicleur 25 et débouche par une ouverture 51 sur la face interne 47A. La canule d'alimentation 49 est raccordée à un tuyau d'alimentation 50.

A l'état assemblé, l'ouverture 51 se trouve en face d'une rainure 53 de distribution de liquide de lavage ménagée sur la face interne 47B de la partie 25B du gicleur 25.

Sur la face interne 47A du gicleur 25, des rainures de projection 55, dans le présent cas au nombre de 5, prennent naissance à un endroit qui sera en face de la rainure 53 de distribution pour être alimentée en liquide de lavage par celle-ci, pour se terminer par des ouvertures débouchantes 59 formant buses de projection, par exemple sur les petits côtés opposés et sur le long côté de dessous du gicleur 25. Les buses 59 permettent de former un éventail de projection d'un liquide de lavage pour projeter le liquide de lavage pratiquement tout le long de la lame racleuse 9.

Le gicleur 25 est tenue dans le logement 41 d'une part par des nervures 67 portées par la paroi 31 du capotage 23 qui poussent le gicleur 25 contre la paroi interne 43 et d'autre part une protubérance 69 du capotage 23 qui se loge par coopération de forme dans une encoche 71 disposé sur un des petits côtés du gicleur 25.

Pour permettre une projection assez loin du liquide de lavage, le capotage 23 présente un premier 73 et un second 75 décrochements dans la paroi latérale 31, qui sont dans l'alignement du gicleur 25, et donc des buses de projection.

La figure 6 montre le gicleur 25 intégré dans le logement 41 par encliquetage dans le capotage 23. On comprend donc que le gicleur 25 peut facilement être monté et démonté du capotage 23, par exemple pour une maintenance.

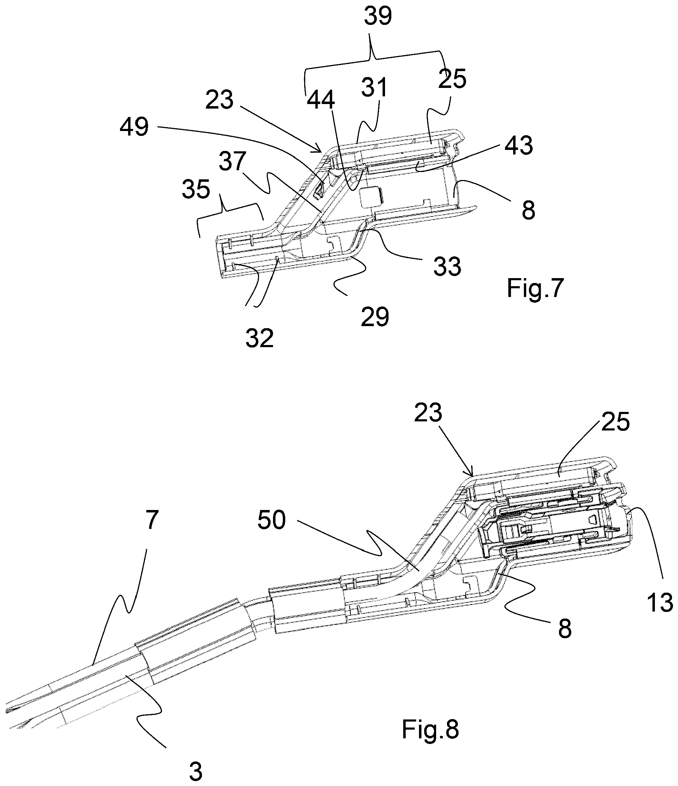

La figure 7 montre par une vue de dessous l'ensemble de la figure 6, c'est-à-dire le capotage 23 avec le gicleur 25 intégré, monté sur la chape de support 8.

La figure 8 montre par une vue de dessous à l'état assemblé le bras de balai 7 avec la chape de support 8 et l'adaptateur 13 ainsi que le capotage 23 et le gicleur 25.

On comprend donc que le dispositif de projection formé par le capotage 23 et le gicleur 25 intégré, peut s'adapter facilement à toute sorte de bras de balai.

Du fait de ses moyens d'encliquetage 27, on peut le monter et démonter facilement, par exemple pour une maintenance ou un échange.

De plus, le gicleur 25 est bien protégé à l'intérieur de son logement 41 et ne subit pas directement des projections de salissures qui pourraient boucher les buses de projection. Ceci est notamment important lors d'un arrêt prolongé du véhicule par temps de pluie.

Bien évidemment, l'invention ne se limite pas aux seuls exemples de réalisation mentionnés. Le dispositif de projection, peut comprendre en outre, deux gicleurs 25, chacun de ces gicleurs 25 étant reçu dans un logement 41 du capotage 23. Afin d'éviter que le ou les gicleurs 25 ne subissent les conséquences de températures basses qui pourraient faire geler les buses 59, il peut être prévu que le dispositif comporte un moyen de chauffage du ou des gicleurs, ce moyen de chauffage pouvant être réalisé par des thermistances ou des résistances à coefficient de température positif.

## Revendications

1. Bras (7) de balai (3) pour système d'essuyage d'une vitre d'un véhicule automobile, comprenant :
- une extrémité (8) de bras (7) de balai (3) en forme de chape destinée à recevoir un dispositif de fixation (5) du balai ;
- un dispositif de projection (21) comprenant d'une part un capotage (23) dimensionné à coiffer l'extrémité (8) du bras (7) de balai (3) en forme de chape, la totalité du volume intérieur du capotage (23) ayant sensiblement la même forme que la forme extérieure de l'extrémité (8) de bras (7) et d'autre part un gicleur (25) d'un liquide de lavage maintenu de façon amovible par le capotage (23).

2. Bras (7) de balai (3) selon la revendication 1, **caractérisé en ce que** le capotage (23) comprend des moyens d'encliquetage (27) sur l'extrémité du bras (8).

3. Bras (7) de balai (3) selon l'une des revendications précédentes, **caractérisé en ce que** le capotage (23) comprend deux parois latérales externes (29, 31) et au moins une paroi interne (43), ladite au moins une paroi interne (43) délimitant avec une des parois latérale externe (29, 31) un logement (41) recevant le gicleur (25).

4. Bras (7) de balai (3) selon la revendication 3, **caractérisé en ce que** le capotage (23) comprend deux parois internes (43) délimitant avec les deux parois latérales externes (29, 31) deux logements (41) recevant chacun un gicleur (25) afin de projeter le liquide de lavage de part et d'autre de la lame racleuse.

5. Bras (7) de balai (3) selon l'une quelconque des revendications 1 à 4, **caractérisé en ce que** le capotage (23) comprend des protubérances (67, 69) pour maintenir le gicleur (25) par coopération de forme.

6. Bras (7) de balai (3) selon l'une quelconque des revendications précédentes, **caractérisé en ce que** le gicleur (25) est formé d'une embase de projection (25A) et d'un couvercle de distribution (25B) en liquide de lavage, l'embase (25A) étant fixée au couvercle (25B).

7. Bras (7) de balai (3) selon l'une quelconque des revendications 1 à 5, **caractérisé en ce que** le gicleur (25) est monobloc.

8. Bras (7) de balai (3) selon l'une quelconque des revendications 1 à 7, **caractérisé en ce que** le gicleur (25) comporte plusieurs buses (59) permettant de former un éventail de projection d'un liquide de lavage.

9. Bras (7) de balai (3) selon l'une quelconque des revendications précédentes, **caractérisé en ce que** le dispositif de projection (21) comporte un moyen de chauffage du gicleur (25).

10. Système d'essuyage comprenant un bras de balai (7) selon l'une quelconque des revendications précédentes.

## Patentansprüche

1. Arm (7) eines Wischers (3) für ein Wischsystem einer Scheibe eines Kraftfahrzeugs, der enthält:
- ein Ende (8) eines Arms (7) eines Wischers (3) in Form eines Gabelkopfs, der dazu bestimmt ist, eine Befestigungsvorrichtung (5) des Wischers aufzunehmen;
- eine Spritzvorrichtung (21), die einerseits eine Verkleidung (23), die bemessen ist, das Ende (8) des Arms (7) eines Wischers (3) in Form eines Gabelkopfs zu bedecken, wobei die Gesamtheit des Innenvolumens der Verkleidung (23) im Wesentlichen die gleiche Form hat wie die Außenform des Endes (8) des Arms (7), und andererseits eine Spritzdüse (25) einer Waschflüssigkeit enthält, die lösbar von der Verkleidung (23) gehalten wird.

2. Arm (7) eines Wischers (3) nach Anspruch 1, **dadurch gekennzeichnet, dass** die Verkleidung (23) Einrasteinrichtungen (27) auf dem Ende des Arms (8) enthält.

3. Arm (7) eines Wischers (3) nach einem der vorhergehenden Ansprüche, **dadurch gekennzeichnet, dass** die Verkleidung (23) zwei äußere Seitenwände (29, 31) und mindestens eine Innenwand (43) enthält, wobei die mindestens eine Innenwand (43) mit einer der äußeren Seitenwände (29, 31) eine die Spritzdüse (25) aufnehmende Aufnahme (41) begrenzt.

4. Arm (7) eines Wischers (3) nach Anspruch 3, **dadurch gekennzeichnet, dass** die Verkleidung (23) zwei Innenwände (43) enthält, die mit den zwei äußeren Seitenwänden (29, 31) zwei Aufnahmen (41) begrenzen, die je eine Spritzdüse (25) aufnehmen, um die Waschflüssigkeit zu beiden Seiten der Wischerlamelle zu spritzen.

5. Arm (7) eines Wischers (3) nach einem der Ansprüche 1 bis 4, **dadurch gekennzeichnet, dass** die Verkleidung (23) Vorsprünge (67, 69) enthält, um die Spritzdüse (25) durch Formzusammenwirkung zu halten.

6. Arm (7) eines Wischers (3) nach einem der vorhergehenden Ansprüche, **dadurch gekennzeichnet, dass** die Spritzdüse (25) von einem Spritzsockel (25A) und von einem Verteilerdeckel (25B) von Waschflüssigkeit gebildet wird, wobei der Sockel (25A) am Deckel (25B) befestigt ist.

7. Arm (7) eines Wischers (3) nach einem der Ansprüche 1 bis 5, **dadurch gekennzeichnet, dass** die Spritzdüse (25) einstückig ist.

8. Arm (7) eines Wischers (3) nach einem der Ansprüche 1 bis 7, **dadurch gekennzeichnet, dass** die Spritzdüse (25) mehrere Düsen (59) aufweist, die es ermöglichen, einen Spritzfächer einer Waschflüssigkeit zu bilden.

9. Arm (7) eines Wischers (3) nach einem der vorhergehenden Ansprüche, **dadurch gekennzeichnet, dass** die Spritzvorrichtung (21) eine Heizvorrichtung der Spritzdüse (25) aufweist.

10. Wischsystem, das einen Wischerarm (7) nach einem der vorhergehenden Ansprüche enthält.

## Claims

1. Wiper arm (7) for a system for wiping a window of a motor vehicle, comprising :
- one end (8) of a wiper arm (7) in the form of a yoke intended for receiving a fixing device of the wiper blade ;
- a spray device (21) comprising a cowling (23) sized to cover the end (8) of the wiper arm (7) in the form of a yoke, the entire internal volume of the cowling being of substantially the same shape as the outer shape of the end of the arm and also a washing fluid spray nozzle (25) that is held in a removable manner by the cowling (23).

2. Wiper arm (7) according to Claim 1, **characterized in that** the cowling (23) comprises means (27) for snap-fastening to the end of the arm (8).

3. Wiper arm (7) according to either of the preceding claims, **characterized in that** the cowling (23) comprises two external side walls (29, 31) and at least one internal wall (43), said at least one internal wall (43) delimiting with one of the external side walls (29, 31) a housing (41) that receives the spray nozzle (25).

4. Wiper arm (7) to Claim 3, **characterized in that** the cowling (23) comprises two internal walls (43) that delimit with the two external side walls (29, 31) two housings (41) that each receive a spray nozzle (25) so as to spray the washing fluid on either side of the squeegee blade.

5. Wiper arm (7) according to any one of Claims 1 to 4, **characterized in that** the cowling (23) comprises protuberances (67, 69) for holding the spray nozzle (25) by shape cooperation.

6. Wiper arm (7) according to any one of the preceding claims, **characterized in that** the spray nozzle (25) is in the form of a spraying base (25A) and of a washing fluid dispensing cover (25B), the base (25A) being fixed to the cover (25B).

7. Wiper arm (7) according to any one of Claims 1 to 5, **characterized in that** the spray nozzle (25) is in one piece.

8. Wiper arm (7) according to any one of Claims 1 to 7, **characterized in that** the spray nozzle (25) has a plurality of nozzles (59) for forming a washing fluid spray fan.

9. Wiper arm (7) according to any one of the preceding claims, **characterized in that** the spray device (21) has a means for heating the spray nozzle (25).

10. Wiping system comprising a wiper arm (7) according to any one of the preceding claims.
